Europäisches Patentamt

(19) European Patent Office

Office européen des brevets

(11) Veröffentlichungsnummer: **0 019 733**
A1

## (12) EUROPÄISCHE PATENTANMELDUNG

(21) Anmeldenummer: 80102330.0

(22) Anmeldetag: 30.04.80

(51) Int. Cl.³: **C 02 F 3/28**, C 02 F 1/38

(30) Priorität: 30.05.79 DE 2921918

(43) Veröffentlichungstag der Anmeldung: 10.12.80
Patentblatt 80/25

(84) Benannte Vertragsstaaten: **AT CH DE FR GB IT LI SE**

(71) Anmelder: Klöckner-Humboldt-Deutz Aktiengesellschaft,
Deutz-Mülheimer-Strasse 111 Postfach 80 05 09,
D-5000 Köln 80 (DE)

(72) Erfinder: Albert, Alfred, Hauptstrasse 152,
D-8752 Krombach (DE)

(74) Vertreter: Beisner, Klaus, Dipl.-Ing., c/o KHD Humboldt
Wedag AG Patente und Lizenzen Wiersbergstrasse
Postfach 91 04 04, D-5000 Köln 91 (DE)

(54) **Verfahren zur Optimierung der Stoffwechsel-Aktivität von Mikro-Organismen im Substrat eines biologischen Reaktions-Systems.**

(57) Bei einem Verfahren zur Faulung von Schlamm einer biologischen Abwasser-Kläranlage wird eine Optimierung der Stoffwechsel-Aktivitäten von reaktionsbeteiligten Mikro-Organismen dadurch erreicht, daß ein Teil des Schlammes aus dem Reaktionssystem (42, 43) abgezweigt (21), mit Hilfe eines künstlichen Schwerefeldes teilweise entwässert (22) und in das Reaktionssystem zurückgeführt wird (23).

Die Entwässerung wird vorzugsweise unmittelbar vor der Mischung mit Frischschlamm und bei Beschleunigungen zwischen 450 und 650 g sowie Verweilzeiten unter 60 sec vorgenommen.

EP 0 019 733 A1

0019733

Anlage zum Patentgesuch der          - 1 -                    K H D
Klöckner-Humboldt-Deutz                                      H 79/27
   Aktiengesellschaft

Verfahren zur Optimierung der Stoffwechsel-Aktivität von
Mikro-Organismen im Substrat eines biologischen Reaktions-
Systems

Beschreibung

Die Erfindung betrifft ein Verfahren zur Optimierung der
Stoffwechsel-Aktivität von Mikro-Organismen im Substrat
eines biologischen Reaktions-Systems, insbesondere beim
Ausfaulen von Schlämmen einer biologischen Abwasser-Kläranlage, wobei ein Teil des im Durchlauf durch das Reaktions-System fermentierten Substrates abgezweigt und vorzugsweise unter Mischung mit frischem Substrat in das
Reaktions-System rezirkuliert wird.

Als Faulung wird bei der Abwasserbehandlung die anaerobe
Zersetzung des Frischschlammes, das heißt der biologische
Abbau der organischen Substanzen im Frischschlamm mit
Hilfe von Methanbakterien bezeichnet.

Der anaerobe Abbau komplexer organischer Stoffe wie beispielsweise Eiweiß, Fett und Kohlenhydrate, läuft im wesentlichen in einer zweistufigen Prozeßfolge ab. Dabei
entstehen in einer ersten Folge aus den Riesenmolekülen
durch bakteriellen Abbau kurzkettige organische Säuren sowie verschiedene Alkohole, Kohlendioxyd  und Was-

- 2 -                                    0019733

serstoff.

In der zweiten Prozeßfolge werden die so entstandenen niedermolekularen Verbindungen von Methan produzierenden Bakterien zu Methan ($CH_4$) und Kohlendioxyd ($CO_2$) durch biologische Stoffwechselvorgänge um-gewandelt.

Dabei sind als Stoffzersetzer in der ersten Prozeßfolge sogenannte fakultativ-anaerobe Bakterien tätig, was bedeutet, daß diese Bakterienarten mit dem im Abwasser/Schlamm gelösten Sauerstoff leben können. Sie können sich jedoch im Verlauf des Fermentationsprozesses auf sauerstoff-freie Stoffwechselbedingungen einstellen. Die dabei entstehenden kurzkettigen organischen Säuren enthalten in der Hauptsache Essigsäure ($CH_3COOH$) und Propionsäure ($CH_3CH_2COOH$), neben mehrwertigen Alkoholen, Kohlendioxyd und Wasserstoff. Wegen dieses Ablaufes wird die erste Prozeßfolge im allgemeinen als "saure" Gärung bezeichnet.

Erst die von den Bakterien der ersten Folge erzeugten Spaltprodukte können von den Methan-Bakterien der zweiten Prozeßfolge verarbeitet werden. Diese benötigen zu einem optimalen Stoffwechsel ein alkalisches Milieu. Beide Fermentationsstufen laufen eng verzahnt miteinander ab. Dabei sind die pH-Gehalte jeder dieser Stufe voneinander unterschieden. Die saure Gärung benötigt im allgemeinen eine Ionen-Konzentration, entsprechend einem pH-Wert um 6,8, während das alkalische Milieu optimale Stoffwechselbedingungen bei einer Ionenkonzentration entsprechend einem pH-Wert zwischen 7,0 und 7,4 hat.

Sinkt bei der sauren Gärung der pH-Wert unter pH 6,2 ab, kommt der Stoffwechsel zum Erliegen, die Gasbildung wird eingestellt und die Bekterien-Stämme sterben ab. Erreicht der Schlamm in der basischen Fermentation einen pH-Wert von 7,8, so kommt ebenfalls der Stoffwechsel der methanbildenden Bakterien und damit die Methan-Produktion zum Erliegen.

In der Fachsprache wird dieser Zustand als "Umkippen" der der Biologie bezeichnet.

Beim Stand der Technik ist es üblich, zur Stabilisierung und Intensivierung der biologischen Vorgänge eine Reihe von Maßnahmen vorzusehen, beispielsweise das Impfen, Umwälzen und Warmhalten der Faulstufe.

Unter Impfen wird eine innige Vermischung des ankommenden Frischschlammes mit einer annähernd gleichen Menge von rückgeführtem Faulschlamm verstanden. Dabei verläuft der Faulvorgang am besten bei erhöhter und vorzugsweise sorgfältig konstant gehaltener Temperatur sowie unter ständiger Durchmischung des Faulraum-Inhaltes, wozu üblicherweise Rührwerke oder Umwälzpumpen, insbesondere mit Biogas-Injektion arbeitende sogenannte Mammutpumpen Verwendung finden.

Zum Stand der Technik gibt es umfangreiche Literaturangaben. Auswahlweise sei hingewiesen auf die Fachzeitschrift "Münchener Beiträge zur Abwasser-, Fischerei- und Flußbiologie", Band 24, mit dem Fachaufsatz "Bau und Betrieb von Schlammfaulungsanlagen" von Professor Dr. Ing. Hanns Roediger, erschienen im Verlag R. Oldenburg, München / Wien 1974. Darin sind die erwähnten Maßnahmen zur Intensivierung der Stoffwechsel-Aktivitäten von Mikro-Organismen, insbesondere beim Ausfaulen von Schlämmen biologischer Abwasser-Kläranlagen, ausführlich behandelt.

Insbesondere beim Prozeß der Schlammfaulung ist wegen der unterschiedlichen Lebens- und Stoffwechselbedingungen der verschiedenen Stämme von Mikro-Organismen ein optimales Gleichgewicht im Aktivitätsverhältnis der säurebildenden Mikroorganismen der ersten Stufe, mit der Aktivität der methanproduzierenden Enzyme der zweiten, alkalischen Stufe eine der wesentlichen Grund-Voraussetzungen. Entsprechend den Abbaugeschwindigkeitskonstanten $K_1$ und $K_2$ der ineinander eingreifenden Stufen werden folgende Fälle unterschieden:

- 4 -

$K_1 = K_2$ : der Faulprozeß läuft optimal,

$K_1 \quad K_2$ : die Zwischenprodukte der ersten Stufe reichern sich an. Die Faulsuppe wird zu sauer (pH kleiner 6,8). Durch Behinderung des Wachstums der Methano-Bakterien nimmt die Methan-Produktion ab, das Mineralisierungsergebnis ist schlecht.

$K_1 \quad K_2$ : Der zweiten Stufe werden nicht genügend Zersetzungsprodukte der ersten Stufe geliefert. Für die Methano-Bakterien wird die Nährstoffgrundlage knapp, die Methan-Produktion sinkt, gegebenenfalls bis zum Erliegen.

Mit den bekannten Maßnahmen zur Intensivierung der Stoffwechsel-Vorgänge ist ein regulativer Eingriff zur Steuerung des Aktivitäts-Gleichgewichts nicht oder, wenn überhaupt, nur sehr begrenzt möglich.
Der Erfindung liegen daher folgende Aufgaben mit dem Gesamtziel der Verbesserung, insbesondere der Intensivierung und Stabilisierung der biologischen Vorgänge zugrunde:

1. Stabilisierung der Stoffwechsel-Vorgänge in der sauren Faul-Stufe, zur Erzeugung optimaler Wachstums-Voraussetzungen für die Methano-Bakterien, unabhängig von der Menge und Stoffgehalt des Zulaufes.

2. Erhöhung der Feststoffgehalte in jeder Faulstufe, unabhängig von Menge und Feststoffgehalt des Zulaufs sowie der dadurch bedingten Verdünnungs-Rate.

3. Optimale Abstimmung der pH-Werte in jeder Stufe des Faulungs-Prozesses, insbesondere unter Vermeidung der bekannten Anwendung von Hilfsstoffen wie beispielsweise Kalkmilch.

4. Maximierung der Gasausbeute, insbesondere der $CH_4$-Komponente, bei möglichst geringem Anteil von $CO_2$.

5. Weitestgehende Mineralisierung mit dem Ziel einer signifikanten Reduzierung des Faulschlamm-Volumens sowie des Restgehaltes an organischer Substanz im ausgefallenen Schlamm.

6. Optimierung der Prozeß-Parameter der verzahnt ineinander ablaufenden unterschiedlichen Bioprozesse, insbesondere durch regeltechnische Einpendelungen optimaler, gegenseitig sich fördernder Stoffwechselbedingungen.

7. Erhöhung der Betriebssicherheit.

8. Schaffung von Voraussetzungen für eine vollautomatische Prozeß-Steuerung.

Die Lösung der Aufgabe gelingt dadurch, daß das abgezweigte Substrat mit Hilfe eines künstlichen Schwerefeldes mindestens teilweise entwässert wird.

Mit der Erfindung ergeben sich folgende Vorteile:

1. Signifikante Erhöhung des Schlamm-Feststoffgehaltes im Reaktionsbehälter bei ständiger intensiver Mischung des Faulraum-Inhaltes.

2. Wegfall oder starke Reduzierung des Überlauf-Wasser-Abzuges aus der Faulanlage.

3. Einpendelung optimaler Stoffwechselvorgänge sowohl in der sauren Gärung als auch in der alkalischen Fermentation, insbesondere durch gegenseitige Regulierung der pH-Werte mit Hilfe von internem Stoff-Austausch.

4. Erhöhung des Mineralisierungs-Grades im ausgefaulten Schlamm, infolgedessen höhere Trockensubstanz-Gehalte, geringeres Volumen und wesentlich günstigeres Entwässerungsverhalten.

5. Maximale Gasausbeute und damit verbesserte Energiegewinnung bei verringertem $CO_2$-Anteil im Biogas, Senkung der Betriebskosten.

6. Überwindung der Gefahr des Umkippens der Biologie, dadurch Erhöhung der Betriebssicherheit bei Vermeidung von Fremdstoffen zur Unterdrückung der Acidität der organischen Säure-Gruppen.

7. Erhöhung der Belastbarkeit der Faulräume durch Optimierung wesentlicher Betriebsparameter, infolgedessen erhebliche Reduktion von Investitions- und Betriebskosten.

8. Schaffung grundlegender Voraussetzungen für eine vollautomatische Steuerung und damit für die Prozeßautomation.

9. Reduzierung der Trübstoffe im rückgeführten Trübwasser, infolgedessen günstigere Abbauergebnisse im Belebtschlamm.

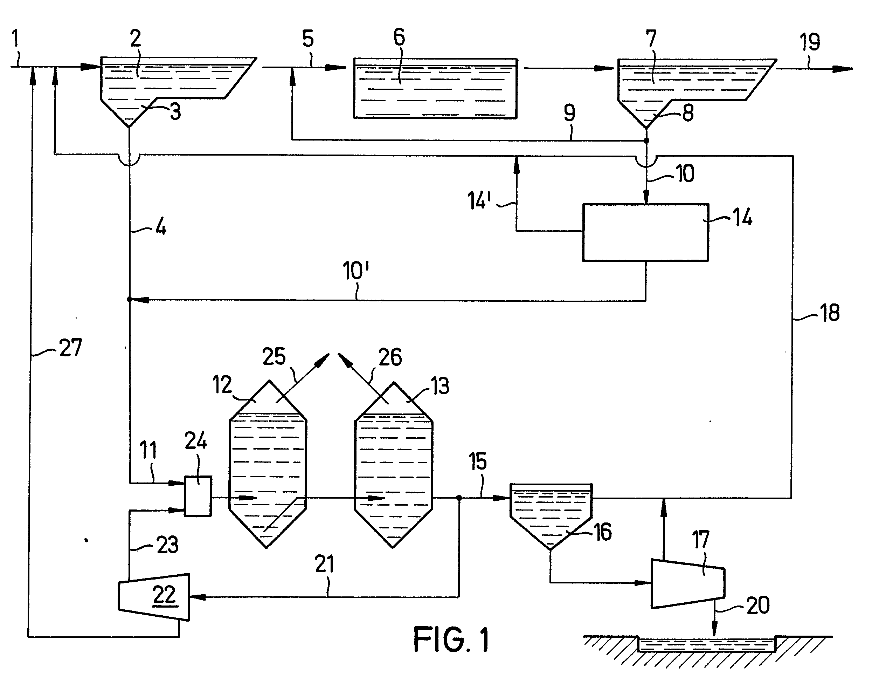

Es ist zwar bekannt, den einer Faulanlage zugeführten Frischschlamm mittels Zentrifugen einzudicken (Filtration und Separation, Proceedings of the Filtration Society, November/Dezember 1974, Seite 606 "The Application of Centrifuges to the Dewatering of Sluges", insbesondere Fig. 1.)

Mit dieser bekannten Maßnahme wird jedoch im Gegensatz zur Erfindung keine Abstimmung der unterschiedlichen und miteinander verzahnt ablaufenden biochemischen Prozeß-Stufen erreicht, sondern bestenfalls eine Anhebung des Feststoffgehaltes im angelieferten Frischschlamm, ohne die Möglichkeit eines Eingriffes und insbesondere eines regelbaren Eingriffes auf die inneren biochemischen Verhältnisse in der Faulstufe, und insbesondere ohne Stabilisierung der pH-Werte.

Es ist weiterhin bekannt,      im Kreislauf geführten Faulschlamm vor der Mischung mit Frischschlamm zum Zwecke der Eindickung durch einen sogenannten Klärapparat hindurchzuleiten (Siehe "Wasser, Luft und Betrieb"; unabhängige Zeitschrift für Wasserwirtschaft, Luftreinhaltung, Abfallverwertung und Umwelttechnik; 17. Jahrgang, Nr. 10; Oktober 1973 Krausskopf-Verlag, Mainz, mit dem Aufsatz: "Anaerober Abbau von Hefefabrikabwasser", von R. Köhler, Hanau; insbesondere Bild 1 "Schematische Darstellung der Versuchsanordnung".)

Die Verwendung eines mit Hilfe der Erdbeschleunigung = 1 g arbeitenden statischen Eindickers oder Klärapparates zum Eindicken der Faulschlamm-Biostämme bringt jedoch - im Gegensatz zur Erfindung - wesentliche Nachteile mit sich. Da es notwendig ist, den Frischschlamm etwa im Verhältnis 1 : 1 mit rückgeführtem Faulschlamm zu mischen, würde ein entsprechender Eindicker wegen des hohen Durchsatzes an Faulschlamm sehr große Abmessungen aufweisen. Ein weiter schwerwiegender Nachteil ergibt sich dadurch, daß das Entwässerungsverhalten des Faulschlammes ganz wesentlich vom Mineralisierunggrad abhängt. Bei nicht voll ausgereiftem Faulschlamm enthält die Biomasse schleimige, gelartige Substanzen, welche die Entwässerung stark beeinträchtigen. In einem solchen Falle ist das Entwässerungsergebnis bei Verwendung eines statischen Eindickers annähernd Null.

00 19733

Der weitaus größte Nachteil aber liegt darin, daß in der Klärspitze eingedickte Mikroorganismen dort zunehmend unter einem Mangel an Nährstoffangebot leiden. Hierdurch wird deren Stoffwechselumsatz stark beeinträchtigt, was soweit führen kann, daß der größte Teil der biologischen Substanz abstirbt.

Darüberhinaus beeinträchtigt ein Absinken der Milieu-Temperatur bereits um wenige Grad Celsius die biologische Aktivität in sehr erheblichem Maße.

Dies alles führt zu einer gravierenden Beeinträchtigung der Lebensverhältnisse der eingedickten Mikro-Organismen und wirkt daher der beabsichtigten Belebung gerade entgegengesetzt.Infolge des nicht steuerbaren Eindickungsergebnisses sowie der Beeinträchtigung der Lebensverhältnisse der Mikro-Organismen ist das Gesamtergebnis bei der Verwendung eines statischen Klärapparates zur Eindickung des Faulschlammes nicht nur äußerst unbefriedigend, sondern es bleibt auch ein Zufallergebnis, ohne die Möglichkeit der Einstellung definierter Betriebsparameter.

Das bekannte Verfahren ist daher weder geeignet, eine Optimierung der Stoffwechselaktivität von Mikro-Organismen bei der Faulung von Schlämmen herbeizuführen, noch läßt sich auf einer derart unsicheren Grundlage eine Prozeßautomation erreichen. Dies ist auch der Grund dafür, daß die Anwendung von Klärapparaten im Kreislauf des Faulprozesses bisher nicht zu einer allgemeinen Anwendung geführt hat.

Anders verhält es sich mit der Erfindung, denn durch die Anwendung eines künstlichen Schwerefeldes und infolge der damit gegebenen Regelbarkeit der entsprechenden Betriebsparameter lassen sich reproduzierbare und einstellbare Betriebszustände in unkomplizierter und überschaubarer Weise erreichen.

0019733

In Ausgestaltung der Erfindung ist daher vorgesehen, daß die Entwässerung vorzugsweise unmittelbar vor der Mischung mit frischem Substrat vorgenommen wird.

Dabei wird das Substrat im künstlichen Schwerefeld einer Beschleunigung zwischen 200 und 1000 g, vorzugsweise zwischen 450 und 650 g unterzogen.

Dadurch ergibt sich die vorteilhafte Möglichkeit, die Einwirkungszeit des Schwerefeldes so kurz wie möglich zu halten, um eine Beeinträchtigung der Stoffwechselbedingungen der Mikro-Organismen mit Sicherheit zu vermeiden.

Daher sieht die Erfindung weiter vor, daß die Einwirkungszeit des Schwerefeldes zwischen 1 und 180 sec., vorzugsweise weniger als 60 sec. beträgt.

Eine weitere vorteilhafte Maßnahme besteht darin, daß die Temperatur des Substrates während der Rezirkulation und insbesondere während der Einwirkung des künstlichen Schwerefeldes im wesentlichen unverändert aufrecht erhalten wird. Dies ist eine besonders wichtige und vorteilhafte sowie erfindungswesentliche Maßnahme, weil dadurch eine temperaturbedingte Beeinträchtigung der Stoffwechsel-Aktivität der Bioorganismen vermieden wird. Denn schon bei Temperaturabsenkungen von 2 bis 3 $^{\circ}$ unter das gewohnte Lebens-Milieu tritt eine erhebliche Störung mit der Folge der Aktivitäts-Verringerung ein.

Deshalb ist es zweckmäßig, daß die Entwässerung mit Hilfe einer Zentrifuge vorgenommen wird. Es ist jedoch auch möglich, die Entwässerung mit Hilfe eines Zyklons und vorzugsweise einer dem Zyklon nachgeschalteten Zentrifuge vorzunehmen. Die Entscheidung darüber, welche der beiden einander annähernd äquivalenten Maßnahmen von Fall zu Fall ergriffen wird, liegt im Ermessen des Fachmannes und richtet sich nach den individuellen Betriebsparametern.

Mit Vorteil wird die Erfindung auf einen zweistufigen Faulprozeß angewendet, wobei vom ausgefaulten Schlamm der zweiten Stufe ein Teilstrom abgezweigt, mit Hilfe eines künstlichen Schwerefeldes mindestens teilweise entwässert und nach Mischung mit Frisch-Schlamm in die erste Stufe rezirkuliert wird.

Dabei wird zweckmäßig so vorgegangen, daß der abgezweigte Faulschlamm bezüglich des Gehaltes an Trockensubstanz pro $m^3$ im Verhältnis 1 : 3, vorzugsweise 1 : 2 eingedickt wird.

Weiter sieht das Verfahren nach der Erfindung vor, daß zur Anhebung des pH-Wertes der ersten Faulstufe eingedickter Schlamm der zweiten Faulstufe in die erste Faulstufe zurückgeführt wird.

Überhaupt hat es sich bei der Erfindung als zweckmäßig erwiesen, daß die Menge und/oder der Eindickungsgrad des rezirkulierten Schlammes nach Maßgabe mindestens eines der folgenden Betriebsparameter einreguliert wird:

a) pH-Werte der ersten und/oder zweiten Stufe, und/oder

b) Zusammensetzung des Produktgases, insbesondere dessen $CO_2$ Gehalt und/oder

c) Verhältnis der Konzentrationen von Mikro-Organismen und Nährstoffen im Substrat, und/oder

d) Feststoffgehalte der Trockensubstanz im ausgefaulten Schlamm.

Mit Vorteil ergibt sich dabei die Möglichkeit, daß der Eindickungsgrad durch Regelung der Differenzdrehzahl einer Vollmantelzentrifuge eingestellt wird.

Im folgenden wird die Erfindung anhand zweier Blockschaltbilder sowie eines der Praxis entnommenen Ausführungsbeispieles näher erläutert.

Es zeigen:

Fig. 1    Eine biologische Abwasser-Kläranlage mit der Erfindung im Blockschaltbild.

Fig. 2    Die beiden Faulstufen einer Kläranlage nach der
Erfindung gemäß Fig. 1, mit Einrichtungen zur
Prozeßautomation, ebenfalls im Blockschaltbild.

Figur 1 zeigt den Zulauf 1 einer im wesentlichen kommunale
Abwässer verarbeitenden Kläranlage. Der Zulauf 1 wird in
die Vorklärung 2 eingeleitet, worin im wesentlichen Sand
sowie grobe mechanische Verunreinigungen ausgeschieden
werden. Außerdem dient die Vorklärung der Homogenisierung
der zufließenden Stoffe und ist mit einer Klärspitze 3
ausgestattet, aus welcher Frischschlamm durch die Leitung 4
abgezogen wird. Der Überlauf 5 wird in ein biologisches
Belebtschlamm-Becken 6 eingeleitet, dessen Überlauf zur
Nachklärung an die Nachklärstufe 7 angeschlossen ist.
In der Klärspitze 8 anfallender Belebtschlamm, das heißt
also, mittels aerober Mikroorganismen teilweise abgebaute
organische Substanz plus Zellwasser, wird zum Teil durch
die Leitung 9 zum Einlauf des Belebtschlamm-Beckens 6 hin
rezirkuliert. Der Rest des Belebt-Schlammes, der sogenannte
Überschuß-Schlamm, wird mit Hilfe der Leitung 10, 10' mit
dem Frischschlamm zusammengeführt, worauf das Schlamm-
Gemisch durch die Leitung 11 in die erste Stufe 12 einer
die beiden Stufen 12 und 13 umfassenden Faulanlage eingetragen wird. Aus der Klärspitze 8 abgezogener Überschuß-
Schlamm wird - je nach dessen Feststoffgehalt - gegebenenfalls, wie bekannt, in einer beliebigen Eindick-Einrichtung 14 auf einen etwas höheren Feststoffgehalt gebracht.
Das dabei anfallende Trübwasser wird durch die Leitung 14'
und 18 in den Zulauf 1 rezirkuliert.

Ausgefaulter Schlamm wird mit der Leitung 15 aus der zweiten Stufe 13 der Faulanlage ausgetragen und zur weiteren Entwässerung beispielsweise einem Klärbecken 16 und gegebenenfalls einer Zentrifuge 17 zugeleitet. Das bei der Entwässerung des Faulschlammes anfallende Trübwasser wird mit der Leitung 18 zum Zulauf 1 der Kläranlage rezirkuliert. Aus dem Nachklärbecken 7 wird geklärtes Abwasser als sogenanntes Brauchwasser mit der Leitung 19 in den nicht dargestellten Vorfluter abgeleitet. Entwässerter Schlamm wird mit der Leitung 20 aus der Zentrifuge ausgetragen. Die weitere Aufbereitung beispielsweise zur landwirtschaftlichen Nutzung, oder zur Verbrennung, wird als bekannt vorausgesetzt und ist daher im Blockschaltbild nicht enthalten.

An die Austragsleitung 15 der Faulstufe 13 ist eine Leitung 21 zur Rezirkulation von ausgefaultem Schlamm angeschlossen. Diese mündet in eine Zentrifuge 22, deren Dickstoffaustrag 23 in den Mischer 24 mündet, durch welchen der eingedickte Faulschlamm mit dem durch die Leitung 11 zugeführten Schlammgemisch innig vermischt wird. Entsprechend dem Stand der Technik, und daher im einzelnen nicht weiter ausgeführt, kann der Mischer 24 oder die Leitung zwischen Mischer 24 und der ersten Faulstufe 12 mit einer Heizung versehen sein, so daß das Gemisch aus eingedicktem Faulschlamm und Frischschlamm vor Eintrag in die erste Faulstufe 12 auf ein gewünschtes Temperatur-Niveau gebracht wird.

Das in den beiden Faulstufen 12 und 13 laufend produzierte Biogas wird abgezogen, wie dies mit den Pfeilen 25 und 26 angedeutet ist.

Das aus der Zentrifuge 22 abgeschiedene Zentrat wird als Trübwasser durch die Leitung 27 und 1 zur Vorklärstufe 2 rezirkuliert.

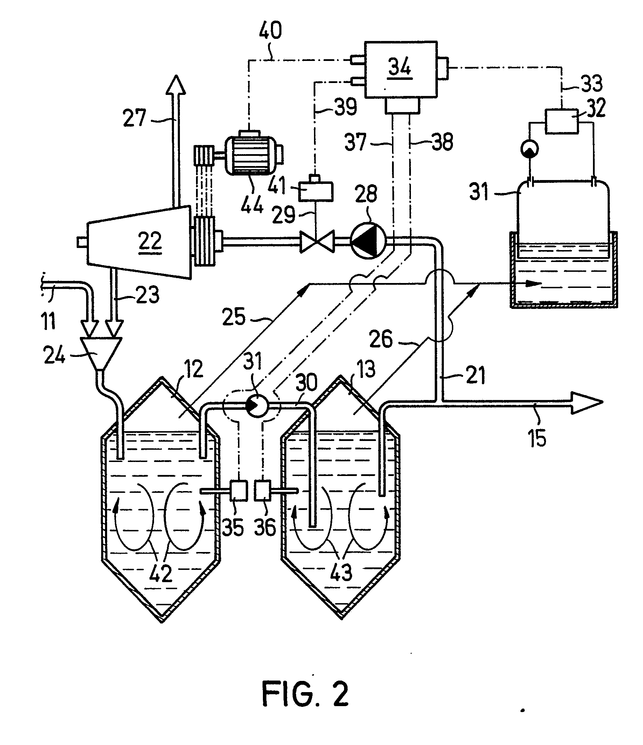

Fig. 2 zeigt ein Beispiel für eine regelungstechnische Ausgestaltung der Anlage im Blockschaltbild. Darin sind gleiche Anlagenteile mit gleichen Ziffern wie in Fig. 1 bezeichnet. In die erste Faulstufe 12 wird - wie vorgängig beschrieben - ein Gemisch aus Frischschlamm und eingedicktem Faulschlamm durch den Mischer 24 eingetragen. Aus der Faulstufe 13 wird mit der Austragsleitung 15 ausgefaulter Schlamm zur Weiterverarbeitung ausgetragen. Mit der Zweigleitung 21 wird ein Teil dieses Schlammes entnommen und mit Hilfe des Förderorganes 28 und des Ventiles 29 in regelbarer Menge in die Zentrifuge 22 eingeleitet. Das vom eingedickten Schlamm getrennte Zentrat wird, wie weiter oben beschrieben, durch die Leitung 27 in den Abwasserzulauf 1 (Fig.1) zurückgeleitet. Eingedickter Faulschlamm wird dagegen durch die Leitung 23 in den Mischer 24 eingeführt, der diesen mit dem Frischschlamm innig vermischt, wobei das Gemisch gegebenenfalls auf eine vorgegebene Betriebstemperatur, beispielsweise 38°C, aufgeheizt wird.

Die Faulstufen 12 und 13 stehen mittels einer Leitung 30 miteinander in Verbindung. In dieser Leitung 30 ist ein Förderorgan 31 angeordnet, beispielweise eine Schlammpumpe, durch welche Schlamm aus der Stufe 12 entnommen und in regelbarer Menge in die Stufe 13 eingetragen wird. Bei der Fermentation in beiden Stufen 12 und 13 entstandenes Biogas wird durch die Gasleitungen 25 und 26 abgezogen und in einen Gasspeicher 31 eingeleitet. Dieser ist mit einer Meßeinrichtung 32 zur Gasanlyse ausgestattet, welche beispielsweise das Verhältnis von $CH_4$ : $CO_2$ ermittelt, und die ermittelten Verhältniswerte in elektrische Signale umwandelt, welche mit der Steuerleitung 33 einer elektronischen Recheneinheit 34, beispielsweise als Störgrößen eines Regelkreises, aufgeschaltet werden. Die Faulstufen 12 und 13 sind mit je einer Meßeinrichtung 35, 36 für den pH-Wert ausgestattet. Diese wandeln ebenfalls die ermittelten Werte in elektrische Signale um, welche mit Hilfe der Steuerleitungen 37 und 38 dem Rechner 34 aufgeschaltet werden.

Aus den übermittelten Daten errechnet der Rechner 34 Werte für Menge und Konzentration des rezirkulierten Faulschlammes, wandelt diese in analoge Steuerimpulse um und überträgt diese mit Hilfe der Steuerleitungen 39 und 40 einerseits auf die Stelleinrichtung 41 des Ventiles 29 und andererseits auf den regelbaren Motorantrieb 44 der Zentrifuge 22.

Auf diese Weise ist es regeltechnisch möglich, die umgewälzte Menge und Konzentration des Schlammes nach Maßgabe beispielsweise des pH-Wertes und/oder der Gaszusammensetzung und/oder beliebiger anderer oder auch mehrerer Prozeßparameter zu steuern.

In den Blockschaltbildern nicht gezeigt sind Vorrichtungen zur Umwälzung des Schlamminhaltes in jeder der Faulstufen 12 oder 13, da diese bekannt sind und im Belieben des Fachmannes liegen. Lediglich durch die Pfeile 42 und 43 ist die Umwälzbewegung des Schlammes an und für sich versinnbildlicht.

Die Erfindung wird im folgenden anhand eines Beispieles näher erläutert.

## B E I S P I E L

Die Erfindung wird versuchsweise in einem Klärwerk durchgeführt, welches im wesentlichen kommunale Abwässer mit einer Beimischungsquote von ca. max. 15 % industrieller Abwässer verarbeitet. Als industrielle Abwässer sind Abgänge aus einem Schlachthof, aus einer Michverarbeitungs-Genossenschaft sowie aus einer Brauerei im Einlauf festgestellt worden. Weiter besteht eine Schwierigkeit darin, daß ein Teilbereich des Abwasser-Netzes mit Regenwasser beaufschlagt wird.

Die Klärwerksanlage ist ausgelegt für 190.000 Einwohner-Gleichwerte, wovon 145.000 Einwohner-Gleichwerte Einleitungen aus dem häuslichen Bereich darstellen.

Das Anlagenkonzept entspricht im wesentlichen dem Blockschaltbild, gemäß Fig. 1. Die Anlage umfaßt demnach einen Sandfang, einen Fettabscheider sowie die üblichen mechanisch/biologisch/chemischen Stufen. Sie ist mit einer zweistufigen Faulungsanlage von je 3000 m³ Inhalt ausgestattet.

Die Faulturmbeschickung beträgt im Mittel 350 m³/d und enthält im Jahresmittel 2,5 % Trockensubstanz im Frischschlamm, wobei jedoch die Werte erheblichen Schwankungen unterliegen. Dabei wurde beobachtet, und zwar über einen Zeitraum von 12 Monaten, daß die Glühverluste im Frischschlamm eine steigende Tendenz von ursprünglich 70 % auf 80 % aufwiesen. Dementsprechend stiegen die Glühverluste auch im ausgefaulten Schlamm von anfänglich 55 % auf 65 % am Ende der erten 6-Monats-Periode. Hierdurch bedingt ergab sich als weitere Schwierigkeit ein ungünstiges Entwässerungs-Verhalten des Faulschlammes infolge Unterschreitung der geplanten Mineralisierungsrate, es trat eine rückläufige Tendenz des spezifischen Gasanfalles und der Qualität des Gases ein, was bedeutete, daß neben einer geringeren Gasausbeute auch der Heizwert des Gases infolge höherer $CO_2$-Gehalte rückläufig war.

0019733

- 16 -

In diesem Betriebsstadium erfolgte eine Anlagenverbesserung gemäß der Erfindung durch Einbau einer Vollmantelzentrifuge in die Faulschlamm-Rückführung zur Impfung und Mischung mit dem Frischschlamm. Zur Anwendung gelangte eine Vollmantel-Schneckenzentrifuge mit 518 mm Ø und 1.500 mm Länge, welche bei 1.500/min dem durchlaufenden Schlamm eine Beschleunigung von 625 g erteilte. Betriebsdaten vor und nach Einbau der Erfindung sind in der folgenden Tabelle enthalten.

Die darin enthaltenen Werte zeigen deutlich den mit der Erfindung erzielten Fortschritt auf. Insbesondere geht aus diesen Zahlenwerten das Resultat einer Optimierung der Stoffwechselaktivität der Mikro-Organismen im gesamten Bereich des biologischen Reaktionssystems hervor, welcher mit der Erfindung erzielt wurde.

0019733

| Tabelle | Stand der Technik | Erfindung |
|---|---|---|
| **Frisch-Schlamm** | | |
| Menge = $m^3$/d | 350 | 261 |
| Trockensubstanz TS = $kg/m^3$ | 23,5 | 23,5 |
| TS =kg/d | 8225 | 6140 |
| Anorganische Bestandteile TS = kg/d | 1777 | 1777 |
| Organ. Bestandteile TS = kg/d | 6448 | 4360 |
| Glühverlust = GV in % | 78,4 | 71,0 |
| **pH-Werte** | | |
| Stufe I | 6,6 | 6,8 |
| Stufe II | 7,5 | 7,2 |
| **Faul-Schlamm** | | |
| Menge = $m^3$/d | 350 | 56,2 |
| Trockensubstanz TS = $kg/m^3$ | 15,1 | 53,2 |
| TS = kg/d | 5270 | 2992 |
| Anorg. TS = kg/d | 1777 | 1777 |
| Organ. TS = kg/d | 3483 | 1215 |
| Glüh-Verlust Frisch-Schlamm | 78,4 % | 71,0 % |
| Glüh-Verlust Faul-Schlamm | 66,2 % | 40,6 % |
| **Gasproduktion** $m^3$/d | 3300 | 4320 |
| Anteil $CO_2$ | 33 % | 26 % |
| **Trübwasser-Rücklauf** | | |
| Trübstoff-Inhalt mg/l | 950 | 290 |

Patentansprüche

1. Verfahren zur Optimierung der Stoffwechselaktivität von Mikroorganismen im Substrat eines biologischen Reaktions-Systems, insbesondere bei der Faulung von Schlämmen einer biologischen Abwasser-Kläranlage, wobei ein Teil des im Durchlauf durch das Reaktions-System fermentierten Substrates abgezweigt und vorzugsweise unter Mischung mit frischem Substrat in das Reaktions-System rezirkuliert wird, d a d u r c h   g e k e n n z e i c h n e t, daß das abgezweigte Substrat mit Hilfe eines künstlichen Schwerefeldes mindestens teilweise entwässert wird.

2. Verfahren nach Anspruch 1, dadurch gekennzeichnet, daß die Entwässerung vorzugsweise unmittelbar vor der Mischung mit frischem Substrat vorgenommen wird.

3. Verfahren nach einem der Ansprüche 1 oder 2, dadurch gekennzeichnet, daß das Substrat im künstlichen Schwerefeld einer Beschleunigung zwischen 200 und 1000 g, vorzugsweise zwischen 450 und 650 g unterzogen wird.

4. Verfahren nach einem der Ansprüche 1 bis 3, dadurch gekennzeichnet, daß die Einwirkungszeit des Schwerefeldes zwischen einer und 180 sec. vorzugsweise weniger als 60 sec. beträgt.

5. Verfahren nach einem der Ansprüche 1 bis 4, dadurch gezeichnet, daß die Temperatur des Substrates während der Rezirkulation und insbesondere während der Einwirkung des künstlichen Schwerefeldes im wesentlichen unverändert aufrechterhalten wird.

6. Verfahren nach einem der Anspüche 1 bis 5, dadurch gekennzeichnet, daß die Entwässerung mit Hilfe einer Zentrifuge vorgenommen wird.

7. Verfahren nach einem der Ansprüche 1 bis 6, dadurch gekennzeichnet, daß die Entwässerung mit Hilfe eines Zyklons und vorzugsweise einer dem Zyklon nachgeschalteten Zentrifuge vorgenommen wird.

8. Verfahren nach einem der Ansprüche 1 bis 7, gekennzeichnet durch dessen Anwendung auf einen zweistufigen Faulprozeß, wobei von ausgefaultem Schlamm der zweiten Stufe ein Teilstrom abgezweigt mit Hilfe eines künstlichen Schwerefeldes mindestens teilweise entwässert, und nach Mischung mit Frisch-Schlamm in die erste Stufe rezirkuliert wird.

9. Verfahren nach einem der Ansprüche 1 bis 8, dadurch gekennzeichnet, daß der abgezweigte Faulschlamm bezüglich des Gehaltes an Trockensubstanz pro $m^3$ im Verhältnis 1 : 3, vorzugsweise 1 : 2 eingedickt wird.

10. Verfahren nach einem der Ansprüche 8 oder 9, dadurch gekennzeichnet, daß zur Anhebung des pH-Wertes der ersten Faulstufe eingedickter Schlamm der zweiten Faulstufe in die erste Stufe zurückgeführt wird.

11. Verfahren nach einem der Ansprüche 1 bis 10, dadurch gekennzeichnet, daß die Menge und/oder der Eindickungsgrad des rezirkulierten Schlammes nach Maßgabe mindestens eines der folgenden Betriebsparameter einreguliert wird:

a) pH-Werte der ersten und/oder zweiten Stufe, und/oder
b) Zusammensetzung des Produktgases, insbesondere dessen $CO_2$-Gehalt, und/oder
c) Verhältnis der Konzentration von Mikroorganismen und

- 3 -    0019733

Nährstoffen im Substrat, und/oder

d) Feststoffgehalt der Trockensubstanz im ausgefaulten Schlamm.

12. Verfahren nach Anspruch 11, dadurch gekennzeichnet, daß der Eindickungsgrad durch Regelung der Differenzdrehzahl einer Vollmantelzentrifuge eingestellt wird.

FIG. 1

0019733

0019733

2/2

FIG. 2

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. ³) |
|---|---|---|---|
| X | DE - A - 1 908 596 (BIRD MACHINE COMP.) <br><br> * Seite 2, Zeile 16 - Seite 4, Zeile 8; Seite 6, Zeile 7 - Seite 7, Zeile 21; Seite 9, Zeile 12 - Seite 12, Zeile 29 * <br><br> -- | 1,2,5, 6,8,11, 12 | C 02 F 3/28 1/38 |
| X | GB - A - 2 007 205 (ALFA-LAVAL) <br><br> * Seite 1, Zeilen 65-94, 102-107 * <br><br> ---- | 1,2,6 | |

**RECHERCHIERTE SACHGEBIETE (Int. Cl. ³)**

C 02 F 3/28
1/38

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02.09.1980 | TEPLY |

EPA form 1503.1  06.78